# FASCICULE DE BREVET EUROPEEN

(11) **EP 4 038 893 B1**
(45) Date de publication et mention de la délivrance du brevet: **14.08.2024**
(21) Numéro de dépôt: 20780765.2
(22) Date de dépôt: 02.10.2020
(51) Int. Cl.: H04N 21/2668, H04N 21/433, H04N 21/44

(54) **PROCÉDÉ DE SIGNALISATION D'UNE SUBSTITUTION À UN TERMINAL, PROCÉDÉ DE SUBSTITUTION PAR UN TERMINAL, PRODUITS PROGRAMME D'ORDINATEUR, SYSTÈME ET TERMINAL CORRESPONDANTS**
VERFAHREN ZUM SIGNALISIEREN EINES ERSATZES AN EIN ENDGERÄT, VERFAHREN ZUM ERSATZ DURCH EIN ENDGERÄT UND ENTSPRECHENDE COMPUTERPROGRAMMPRODUKTE, SYSTEM UND ENDGERÄT
METHOD FOR SIGNALLING A SUBSTITUTION TO A TERMINAL, METHOD FOR SUBSTITUTION BY A TERMINAL, AND CORRESPONDING COMPUTER PROGRAM PRODUCTS, SYSTEM AND TERMINAL

(30) Priorité: 04.10.2019 FR 1910987
(43) Date de publication de la demande: 10.08.2022
(73) Titulaire: Enensys Technologies, 35510 Cesson-Sévigné (FR); TDF, 92120 Montrouge (FR)
(72) Inventeur: VINCENT, David, 35150 AMANLIS (FR)
(74) Mandataire: Vidon Brevets & Stratégie
(86) Numéro de dépôt international: PCT/EP2020/077753
(87) Numéro de publication internationale: WO 2021/064226

(56) Documents cités:
- EP-A1- 3 235 252
- EP-B1- 3 235 252
- WO-A1-2019/011655
- US-A1- 2011 145 857

## Description

### Domaine de l'invention

Le domaine de l'invention est celui de la substitution de contenu au sein d'un flux diffusé (c'est-à-dire le remplacement d'un contenu par un autre). On parle également d'insertion de contenu, ou encore de décrochage.

Plus précisément l'invention concerne un procédé de signalisation, à un terminal, de la substitution d'un contenu diffusé via un réseau de diffusion auquel est connecté le terminal par un contenu ciblé pour le terminal en question, ainsi qu'un procédé de substitution correspondant mis en oeuvre dans le terminal.

L'invention a de nombreuses applications, notamment, mais non exclusivement, dans le domaine de la publicité ciblée, la méthode décrite permettant une restitution d'une publicité personnalisée (ciblée) au niveau d'un terminal en lieu et place d'une publicité diffusée par un réseau de diffusion, e.g. un réseau selon le standard DVB-T/T2 (de l'anglais « Digital Video Broadcasting - Terrestrial »), ISDB-T (de l'anglais « Integrated Services Digital Broadcasting - Terrestrial »), ATSC-3 (de l'anglais « Advanced Television Systems Committee »), ou encore DTTB (de l'anglais « Digital Television Terrestrial Broadcasting »).

### Art antérieur et ses inconvénients

Il existe aujourd'hui des protocoles permettant d'insérer des ordres de décrochage dans un flux de données véhiculant un contenu diffusé au sein d'un réseau de diffusion.

Par exemple, le protocole SCTE (pour « Society of Cable Télécommunications Engineers » en anglais) 104 permet de transmettre de tels ordres, classiquement entre un studio d'enregistrement de la chaine de diffusion et un codeur embarqué dans la tête de réseau. Plus particulièrement, les ordres en question sont soit insérés dans le flux SDI (pour « Serial Digital Interface » en anglais) produit en sortie du studio d'enregistrement, soit véhiculés en parallèle du flux SDI via par exemple une connexion IP (pour « Internet Protocol » en anglais).

Les ordres au format SCTE 104 sont classiquement reçus par le codeur qui les traduit au format SCTE 35 (autre protocole) et les insère dans son flux MPEG-TS (pour « Moving Picture Experts Group - Transport Stream » en anglais) de sortie, à destination d'un multiplexeur également embarqué dans la tête de réseau.

Le multiplexeur réalise ainsi des décrochages entre un programme national et un programme local sur la base de tels ordres reçus afin de générer un flux de données multiplexé correspondant.

Des solutions de signalisation à un terminal de la substitution de contenus diffusés par des publicités ciblées ont été développées sur la base de tels protocoles. A titre d'exemple la solution de l'opérateur britannique SKY est basée sur l'usage du protocole SCTE 35.

Cependant, les protocoles (standards) SCTE 35 ou 104 ne sont pas normalisés pour les terminaux destinés à restituer les contenus ciblés en question et ne sont donc pas implémentés par défaut sur ces derniers. De telles solutions de signalisation à un terminal nécessitent ainsi l'usage d'un récepteur propriétaire au niveau du terminal afin de pouvoir interpréter les ordres reçus selon un de ces protocoles SCTE 35 et 104.

Il est par ailleurs connu du document WO2019/011655 une technique de signalisation d'une substitution de contenu, basée sur la génération de messages de notification d'événement. Selon cette technique, la substitution est mise en oeuvre par le terminal à réception du message de notification d'événement correspondant.

Il est également connu du document US2011/0145857 une technique d'insertion d'une publicité dans un flux vidéo diffusé en direct, basée sur la connaissance de plages de publicités prédéterminées dans le flux.

Il existe toutefois un besoin pour une méthode de signalisation d'une substitution de contenus à un terminal grand public tel que l'on peut en trouver dans le commerce afin de minimiser le coût de la solution ainsi que d'en faciliter le déploiement. Il existe notamment un besoin pour une solution permettant à un terminal d'effectuer une substitution à un instant précis.

### Exposé de l'invention

Dans un mode de réalisation de l'invention, il est proposé un procédé de signalisation, à un terminal, de la substitution d'un contenu diffusé via un réseau de diffusion auquel est connecté le terminal par un contenu de substitution ciblé au moins pour le terminal. Un tel procédé comprend :
- une obtention d'au moins un paquet d'informations de substitution comprenant une information temporelle indicative d'un instant d'exécution par le terminal d'au moins une action pour la substitution du contenu diffusé par le contenu de substitution. L'information temporelle correspond à une date de restitution d'une image du contenu diffusé en référence à une horloge de référence embarquée dans le contenu diffusé ;
- une génération d'au moins un message de notification d'événement comprenant au moins une information temporelle parmi la ou les informations temporelles reçues via ledit au moins un paquet d'informations de substitution ; et
- une insertion, dans un flux de données véhiculant le contenu diffusé au sein du réseau de diffusion, dudit au moins un message de notification d'événement à un emplacement temporel antérieur à ladite au moins une information temporelle dans un ordre chronologique de restitution des images du contenu diffusé.

Ainsi, l'invention propose une solution nouvelle et inventive pour permettre la signalisation à un terminal, via un réseau de diffusion, de la substitution d'un contenu diffusé par un contenu ciblé (e.g. une publicité ciblée pour un utilisateur du terminal en question).

Plus particulièrement, l'instant d'exécution de la (ou des) action de substitution par le terminal correspond à une date de restitution d'une image du contenu diffusé en référence à une horloge de référence embarquée dans le contenu diffusé lui-même. Ainsi, via le message de notification d'événement reçu et l'horloge de référence embarquée dans le contenu diffusé, le terminal a les informations temporelles dont il a besoin afin de synchroniser l'exécution de la (ou des) action de substitution avec le contenu diffusé.

Par ailleurs, la signalisation de la substitution peut s'appuyer sur des standards déjà implémentés dans certains terminaux, e.g. via des messages « streamevent » au format DSM-CC (pour « Digital Storage Media Command and Control » en anglais).

Dans certains modes de réalisation, ledit au moins un paquet d'informations de substitution comprend au moins une information d'identification, ladite au moins une action étant fonction de ladite au moins une information d'identification. La génération comprend une encapsulation de ladite au moins une information d'identification dans ledit au moins un message de notification d'événement.

Ainsi, un message de notification d'événement peut déclencher plusieurs actions de substitution associées à plusieurs informations d'identification.

Dans certains modes de réalisation, ledit au moins un paquet d'informations de substitution comprend une unique information d'identification pouvant prendre plusieurs valeurs associées chacune, dans le terminal, à un jeu distinct d'au moins une action. La génération comprend une encapsulation de l'unique information d'identification dans ledit au moins un message de notification d'événement.

Ainsi, un message de notification d'événement peut déclencher une séquence prédéfinie d'actions de substitution associée à une information d'identification donnée.

Dans certains modes de réalisation, le procédé comprend une obtention d'au moins une information d'identification non comprise dans ledit au moins un paquet d'informations de substitution. Ladite au moins une action est fonction de ladite au moins une information d'identification. La génération comprend une encapsulation de ladite au moins une information d'identification dans ledit au moins un message de notification d'événement.

Dans certains modes de réalisation, le procédé comprend une obtention d'une unique information d'identification pouvant prendre plusieurs valeurs associées chacune, dans le terminal, à un jeu distinct d'au moins une action. L'unique information d'identification est non comprise dans ledit au moins un paquet d'informations de substitution. La génération comprend une encapsulation de l'unique information d'identification dans ledit au moins un message de notification d'événement. Ainsi, le système de diffusion mettant en oeuvre le procédé de signalisation obtient les informations d'identification par un autre canal que celui des paquets d'informations de substitution véhiculant les informations temporelles. Par exemple, une plateforme de gestion des publicités fournit directement, e.g. via un réseau large bande, les informations d'identification au système de diffusion mettant en oeuvre le procédé de signalisation. Dans ce cas, le système en question associe séquentiellement, par exemple selon un ordre prédéterminé (e.g. selon l'ordre de réception) les informations d'identification reçues de la plateforme de gestion des publicités aux informations temporelles reçues via les paquets d'informations de substitution afin de générer les messages de notifications d'événements.

Dans certains modes de réalisation, ledit au moins un paquet d'informations de substitution suit un protocole SCTE 35.

Dans un autre mode de réalisation de l'invention, il est proposé un procédé de substitution, par un terminal, d'un contenu diffusé via un réseau de diffusion auquel est connecté le terminal par un contenu de substitution ciblé au moins pour le terminal. Selon un tel procédé le terminal effectue :
- une réception d'au moins un message de notification d'événement inséré dans un flux de données véhiculant le contenu diffusé au sein du réseau de diffusion. Ledit au moins un message de notification d'événement comprend au moins une information temporelle indicative d'un instant d'exécution par le terminal d'au moins une action pour la substitution du contenu diffusé par le contenu de substitution. Ladite au moins une information temporelle correspond à une date de restitution d'une image du contenu diffusé en référence à une horloge de référence embarquée dans le contenu diffusé ; et
- une exécution de ladite au moins une action à un instant d'exécution fonction de ladite au moins une information temporelle.

Ainsi, via le message de notification d'événement reçu et l'horloge de référence embarquée dans le contenu diffusé, le terminal a les informations temporelles dont il a besoin afin de synchroniser l'exécution de la (ou des) action de substitution avec le contenu diffusé.

Par ailleurs, la signalisation de la substitution au terminal peut s'appuyer sur des standards existants, e.g. des messages « StreamEvents » au format DSM-CC.

Dans certains modes de réalisation, l'exécution comprend une obtention d'au moins une information d'identification encapsulée dans ledit au moins un message de notification d'événement. Ladite au moins une action est fonction de ladite au moins une information d'identification obtenue.

Dans certains modes de réalisation, l'exécution comprend une obtention d'une unique information d'identification pouvant prendre plusieurs valeurs associées chacune, dans le terminal, à un jeu distinct d'au moins une action. Ladite au moins une action est fonction de l'unique information d'identification obtenue.

Dans certains modes de réalisation, le terminal effectue une réception du contenu ciblé via un réseau large bande auquel est connecté le terminal.

Dans certains modes de réalisation, ladite au moins une action appartient au groupe comprenant :
- une sélection de l'horloge du flux de données utilisée pour réaliser la synchronisation de la substitution (par exemple de type PCR, pour « Program Clock Reference » en anglais, ou TEMI, pour « Timed External Media Information » en anglais) ;- une requête en informations de téléchargement du contenu ciblé via un réseau large bande ;
- un téléchargement du contenu ciblé via le réseau large bande sur la base des informations de téléchargement ;
- un signalement que le terminal est prêt à procéder à la substitution ;
- un décodage du contenu ciblé ;
- une restitution du contenu ciblé sous une forme décodée ;
- un signalement que le contenu ciblé a été substitué au contenu diffusé ; et
- une reprise du décodage du contenu diffusé.

Dans certains modes de réalisation, le terminal est un terminal hybride supportant le standard HbbTV, pour « Hybrid Broadcast Broadband TV » en anglais.

Dans certains modes de réalisation, le flux de données est au format MPEG-TS. Au moins un message de notification d'événement est un « streamevent » au format DSM-CC.

Dans certains modes de réalisation, le flux de données est au format MPEG-TS. La date de restitution d'une image du contenu diffusé est un PTS, pour « Présentation TimeStamp » en anglais. L'horloge de référence embarquée dans le contenu diffusé est un signal d'horloge PCR, pour « Program Clock Reference » en anglais. Des horloges complémentaires peuvent être transportées dans le flux de données, comme une composante TEMI par exemple. Une telle composante TEMI peut notamment être transportée dans les paquets TS, par exemple dans le champ d'adaptation (« adaptation_field »). L'utilisation de ce type d'horloge complémentaire peut notamment nécessiter une signalisation supplémentaire comme la définition d'une composante « component_TAG » pour une horloge TEMI.

L'invention concerne également un programme d'ordinateur comprenant des instructions de code de programme pour la mise en oeuvre d'un procédé de signalisation ou d'un procédé de substitution (selon l'un quelconque des différents modes de réalisation précités), lorsqu'il est exécuté sur un ordinateur.

Dans un autre mode de réalisation de l'invention, il est proposé un système de diffusion configuré pour signaler, à un terminal, la substitution d'un contenu diffusé via un réseau de diffusion auquel est connecté le terminal par un contenu de substitution ciblé au moins pour le terminal. Un tel système de diffusion comprend une machine de calcul reprogrammable ou une machine de calcul dédiée, configurée pour mettre en oeuvre les étapes du procédé de signalisation selon l'invention (selon l'un quelconque des modes de réalisation précités).

Ainsi, les caractéristiques et avantages de ce système sont les mêmes que ceux du procédé de signalisation décrit précédemment. Par conséquent, ils ne sont pas détaillés plus amplement.

En particulier, un tel système de diffusion comprend au moins un codeur (ou un module de codage), un multiplexeur (ou un module de multiplexage) et un dispositif de signalisation. De telles entités, matérielles ou logicielles, peuvent appartenir à un ou plusieurs équipements.

Dans un autre mode de réalisation de l'invention, il est proposé un terminal configuré pour substituer un contenu diffusé via un réseau de diffusion auquel est connecté le terminal par un contenu de substitution ciblé au moins pour le terminal. Un tel terminal comprend une machine de calcul reprogrammable ou une machine de calcul dédiée, configurée pour mettre en oeuvre les étapes du procédé de substitution selon l'invention (selon l'un quelconque des modes de réalisation précités).

Ainsi, les caractéristiques et avantages de ce terminal sont les mêmes que ceux du procédé de substitution précédemment. Par conséquent, ils ne sont pas détaillés plus amplement.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig. 1****]** illustre un exemple de système de diffusion télévisuelle auquel est connecté un terminal, selon un mode de réalisation de l'invention ;
**[****Fig. 2****]** illustre un exemple de structure de message de notification d'événement tel qu'utilisé pour la signalisation entre certaines entités de la Fig. 1 selon un mode de réalisation de l'invention ;
**[****Fig. 3****]** illustre les étapes d'un procédé de signalisation, à un terminal, de la substitution d'un contenu diffusé via un réseau de diffusion selon un mode de réalisation de l'invention ;
**[****Fig. 4****]** illustre un exemple de structure de système de diffusion télévisuelle permettant la mise en oeuvre du procédé de la Fig. 3 ;
**[****Fig. 5****]** illustre les étapes d'un procédé de substitution, par un terminal, d'un contenu diffusé via un réseau de diffusion selon un mode de réalisation de l'invention ;
**[****Fig. 6****]** illustre un exemple de structure de terminal permettant la mise en oeuvre du procédé de la Fig. 5 ;
**[****Fig. 7****]** illustre un exemple d'actions effectuées par les entités de la Fig. 1 lors de la mise en oeuvre des procédés des Fig. 3 et Fig. 5 selon un mode de réalisation de l'invention.

### Description détaillée de modes de réalisation de l'invention

Sur toutes les figures du présent document, les éléments et étapes identiques sont désignés par une même référence.

Le principe général de l'invention consiste en l'encapsulation dans un message de notification d'événement d'une information temporelle indicative d'un instant d'exécution par un terminal d'au moins une action pour la substitution d'un contenu diffusé par un contenu de substitution. Une telle information temporelle correspond à une date de restitution d'une image du contenu diffusé en référence à une horloge de référence embarquée dans le contenu diffusé. Le message de notification d'événement est inséré dans un flux de données véhiculant le contenu diffusé au sein d'un réseau de diffusion à destination du terminal.

Ainsi, via le message de notification d'événement reçu et l'horloge de référence embarquée dans le contenu diffusé, le terminal a les informations temporelles dont il a besoin afin de synchroniser l'exécution de la (ou des) action de substitution avec le contenu diffusé. Par ailleurs, la signalisation de la substitution peut s'appuyer sur des standards déjà implémentés dans certains terminaux, i.e. des standards dont les messages de notifications ne contiennent pas de référence temporelle permettant une exécution synchrone par rapport au flux de données diffusé.

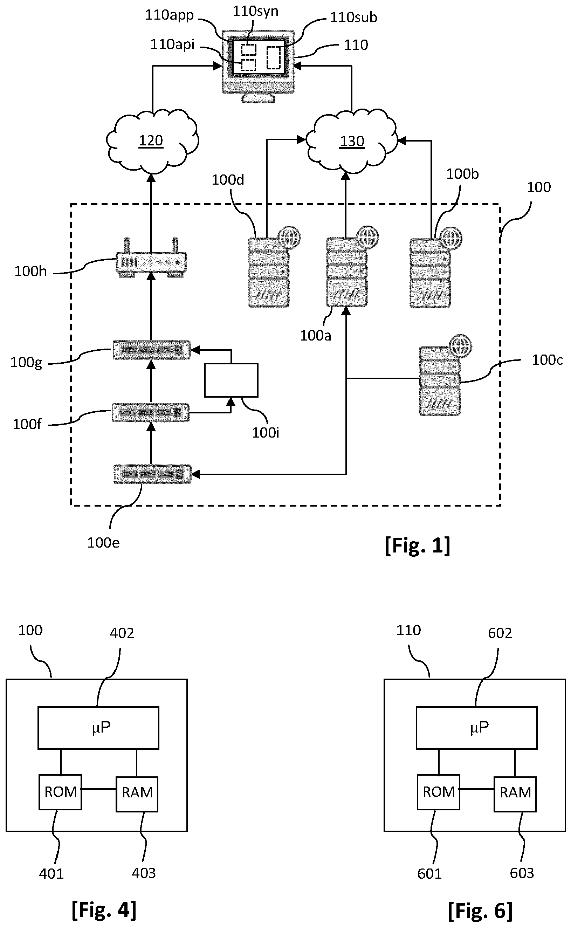

On décrit maintenant, en relation avec la **Fig. 1****,** un système 100 de diffusion télévisuelle auquel est connecté un terminal 110 selon un mode de réalisation de l'invention.

Plus particulièrement, le terminal 110 est un téléviseur grand public connecté d'une part à un réseau de diffusion 120 télévisuelle et d'autre part à un réseau large bande 130 du type internet.

Un tel terminal 110 est parfois aussi appelé « TV connectée », « SmartTV », « Digital TV », « Internet TV », « Interactive TV », « hybrid TV », « PCTV », « Hybrid Broadcast Broadband TV », « HbbTV », ou « H4TV ».

Le terminal 110 est compatible avec le standard HbbTV de sorte à pouvoir télécharger, via le réseau large bande 130, une application HbbTV particulière (permettant la mise en oeuvre de la substitution par le terminal 110, comme détaillé ci-après) depuis un serveur internet statique 100a. Un tel téléchargement se fait sur la base d'informations reçues (e.g. une adresse du type URL (pour « Uniform Resource Locator » en anglais)) par exemple via une table DVB AIT (pour « Digital Video Broadcasting » et « Application Information Table » en anglais) contenue dans le flux de données au format MPEG-TS reçu du système 100 de diffusion télévisuelle via le réseau de diffusion 120. Plus particulièrement, le réseau de diffusion 120 est par exemple un réseau TNT (pour « Télévision Numérique Terrestre ») utilisant le standard DVB-T pour diffuser le flux de données au format MPEG-TS. Dans d'autres modes de réalisation, le réseau de diffusion 120 est un réseau satellite utilisant le standard DVB-S, ou un réseau câble utilisant le standard DVB-C. Dans d'autres modes de réalisation, le réseau de diffusion 120 s'identifie à un réseau basé sur l'usage d'un protocole de transport sur IP et le terminal 110 est par exemple une « Set-top-box » incluant (ou communiquant avec) une passerelle de réseau connectée au réseau large bande 130. Un tel protocole de transport sur IP est par exemple le protocole UDP/IP (pour « User Datagram Protocol » en anglais) permettant une diffusion du type multicast, ou le protocole TCP/IP (pour « Transmission Control Protocol » en anglais) permettant une diffusion du type unicast telle que privilégiée par les diffuseurs dits OTT (pour « Over The Top » en anglais). Dans certaines variantes, le réseau basé sur l'usage d'un protocole de transport sur IP partage des ressources physiques avec le réseau large bande 130. De retour à la Fig. 1, le terminal 110 est configuré pour recevoir des messages de notifications d'événements 200 contenus dans le flux de données au format MPEG-TS véhiculé par le réseau de diffusion 120. Ces messages de notifications d'événements 200 sont par exemple des « StreamEvents » au format DSM-CC (pour « Digital Storage Media Command and Control » en anglais).

Le système 100 de diffusion télévisuelle comprend une plateforme de gestion des publicités 100c qui fournit une (ou plusieurs) information d'identification (référençant par exemple une (ou plusieurs) action à exécuter par le terminal 110) destinée à être encapsulée dans un message de notification d'événement 200 à destination du terminal 110. Plus particulièrement, la plateforme de gestion des publicités 100c transmet l'information d'identification :
- d'une part au serveur internet statique 100a qui la transmet à son tour au terminal 110 via le réseau large bande 130 (e.g. via un fichier au format XML (pour « eXtensible Markup Language » en anglais). Comme discuté ci-dessus, une telle information permet au terminal 110 d'identifier la (ou les) actions de substitution à mettre en oeuvre ; et
- d'autre part à un système de production vidéo 100e (comprenant par exemple un lecteur SDI et un équipement permettant d'insérer un paquet de données au format SCTE 104).

Le système de production vidéo 100e génère un flux SDI qui est destiné à être multiplexé dans le flux de données diffusé via le réseau de diffusion 120 après encodage dans un codeur vidéo 100f, multiplexage par un multiplexeur MPEG/DVB 100g, et génération du signal modulé de diffusion par un modulateur DVB 100h.

La plateforme de gestion des publicités 100c fournit également un identifiant du contenu diffusé à substituer au système de production vidéo100e. Ainsi, sur la base de l'identifiant du contenu à substituer reçu de la plateforme de gestion des publicités 100c, le système de production vidéo100e détermine une première information temporelle synchrone du flux SDI. Une telle première information temporelle définit un instant auquel une (ou plusieurs) action doit être exécutée par le terminal 110 afin de substituer un contenu de substitution au contenu diffusé identifié par l'information d'identification. De la sorte, le système de production vidéo 100e génère des premiers paquets d'informations de substitution au format SCTE 104. Les premiers paquets d'informations de substitution comprennent ainsi les premières informations temporelles et les informations d'identifications correspondantes. En pratique, les premières informations temporelles appartiennent au groupe comprenant :
- au moins une référence temporelle absolue en référence à une horloge dite « timecode » du flux SDI ; et
- au moins un écart temporel par rapport à la position temporelle à laquelle le premier paquet d'information de substitution véhiculant l'information temporelle en question est inséré dans le flux SDI (e.g. une « preroll value » du standard SCTE 104).

Optionnellement, le système de production vidéo 100e insère également la durée de substitution associée aux informations temporelles et aux informations d'identifications correspondantes dans les premiers paquets d'informations de substitution au format SCTE 104. Le système de production vidéo 100e transmet les premiers paquets d'informations de substitution au codeur vidéo 100f (e.g. via une connexion internet).

Le codeur vidéo 100f génère le flux MPEG-TS au format MPEG4 à partir du flux au format SDI reçu du système de production vidéo 100e. Le codeur vidéo 100f est notamment apte à transformer des commandes au format SCTE 104 présentes dans le flux SDI reçu en commandes au format SCTE 35. Plus particulièrement, le codeur vidéo 100f est capable de transformer les références temporelles (e.g. le ou les « timecode » ou « preroll value ») utilisées par le standard SCTE 104 en références temporelles PTS (pour « Présentation TimeStamp » en anglais) utilisées par le standard SCTE 35. Plus particulièrement, une référence temporelle PTS donnée correspond à une date de restitution d'une image correspondante du contenu diffusé en référence à une horloge de référence embarquée dans le contenu diffusé, ici un signal d'horloge PCR ou TEMI. De la sorte, le codeur vidéo 100f convertit les premiers paquets d'informations de substitution au format SCTE 104 présents dans le flux SDI reçu en paquets d'informations de substitution au format SCTE 35 insérés dans le flux MPEG-TS qu'il délivre au multiplexeur MPEG/DVB 100g. Les paquets d'informations de substitution au format SCTE 35 comprennent ainsi les informations temporelles et les informations d'identifications correspondantes.

Par exemple, les informations temporelles, i.e. les PTS, sont véhiculées au choix dans un des boucles/descripteurs/champs suivants tels que définis dans le standard SCTE 35 :
- Time_signal() -> splice_Time() ;
- splice_schedule() -> utc_splice_time ; et
- splice_insert() -> splice_time() -> pts_time

De même, les informations d'identifications sont par exemple véhiculées au choix dans un des boucles/descripteurs/champs suivants tels que définis dans le standard SCTE 35 :
- splice_info section()
   ∘ splice_info_commandes
- splice_schedule()
   ∘ splice_event_id (32 bits)
   ∘ unique_program_id (16 bits)
   ∘ avail_num (8 bits)
   ∘ avails_expected (8 bits)
- splice_insert()
   ∘ splice_event_id (32 bits)
   ∘ unique_program_id (16 bits)
   ∘ avail_num (8 bits)
   ∘ avails_expected (8 bits)
- splice_descriptor()
   ∘ avail_descriptor
      ▪ provider_avail_id (32 bits)
   ∘ DTMF_descriptor()
      ▪ DTMF_char (N bits)
   ∘ segmentation_descriptor()
      ▪ segmentation_event_id
      ▪ segmentation_upid (N bits, depend on segmentation_upid_type)

Optionnellement, le codeur vidéo 100f insère également la durée de substitution associée aux informations temporelles et aux informations d'identifications correspondantes dans les paquets d'informations de substitution au format SCTE 35.

De retour à la Fig. 1, sur la base des paquets d'informations de substitution au format SCTE 35 (e.g. obtenus via une extraction à partir du flux MPEG-TS en provenance du codeur vidéo 100f), un dispositif 100i de signalisation génère les messages de notifications d'événements correspondants, ici des messages « StreamEvents » au format DSM-CC. De tels messages de notifications d'événements 200 encapsulent les informations véhiculées par les paquets d'informations de substitution, et notamment les informations temporelles (les PTS au format SCTE 35) et les informations d'identifications correspondantes. Dans une implémentation particulière, un message de notifications d'événements 200 peut transporter l'ensemble de la section SCTE 35 (splice_info section() par exemple). Dans un mode de réalisation particulier, une seule valeur de PTS est comprise dans un message de notifications d'évènements. Le dispositif 100i transmet les messages de notifications d'événements 200 au multiplexeur MPEG/DVB 100g.

Le multiplexeur MPEG/DVB 100g insère chaque message de notification d'événement 200 dans le flux multiplexé qu'il génère à un endroit temporel antérieur aux images dont les dates de restitution correspondent aux informations temporelles véhiculées dans le message de notification d'événement 200 en question. De la sorte, le terminal 110 reçoit le message de notification d'événement 200 avant la date prévue d'exécution des actions de substitution correspondantes en référence au contenu diffusé.

Dans d'autres modes de réalisation, le dispositif 100i est un module inclus dans le codeur vidéo 100f. Dans ce cas, le dispositif 100i obtient par exemple les paquets d'informations de substitution au format SCTE 35 directement, i.e. sans avoir à les extraire du flux MPEG-TS.

Dans d'autres modes de réalisation, le dispositif 100i est un module inclus dans le multiplexeur MPEG/DVB 100g ou un module disposé en aval du multiplexeur MPEG/DVB 100g. Dans ces modes de réalisation, le dispositif 100i insère par exemple les messages de notifications d'événement 200 dans le flux MPEG-TS.

Dans d'autres modes de réalisation, le dispositif 100i est un module placé en parallèle du multiplexeur MPEG/DVB 100g. Dans ces modes de réalisation, le dispositif 100i prend en entrée le flux multiplexé délivré par le multiplexeur MPEG/DVB 100g et délivre en sortie tout ou partie des composantes du flux dans lesquelles il a inséré les messages de notifications d'événement 200. Les composantes du flux dans lesquelles ont été insérés les messages de notifications d'événement 200 sont ainsi réinjectées en entrée du multiplexeur MPEG/DVB 100g.

Dans la présente demande, on notera que le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

Dans d'autres modes de réalisation, le dispositif 100i reçoit les informations d'identifications directement du serveur internet statique 100a, e.g. au travers du réseau large bande 130. Dans ces modes de réalisation, les paquets d'informations de substitution au format SCTE 35 peuvent encapsuler uniquement les informations temporelles. En d'autres termes, les informations d'identifications sont optionnelles dans les paquets d'informations de substitution au format SCTE 35 dans ces modes de réalisation.

De retour à la Fig. 1, le modulateur DVB 100h génère le signal modulé transportant le flux de données délivré par le multiplexeur MPEG/DVB 100g au travers du réseau de diffusion 120.

Le terminal 110 reçoit ainsi, d'une part, le signal modulé transportant les messages de notifications d'événements 200 délivrés par le multiplexeur MPEG/DVB 100g au travers du réseau de diffusion 120 et, d'autre part, les informations d'identifications délivrées par le serveur internet statique 100a au travers du réseau large bande 130.

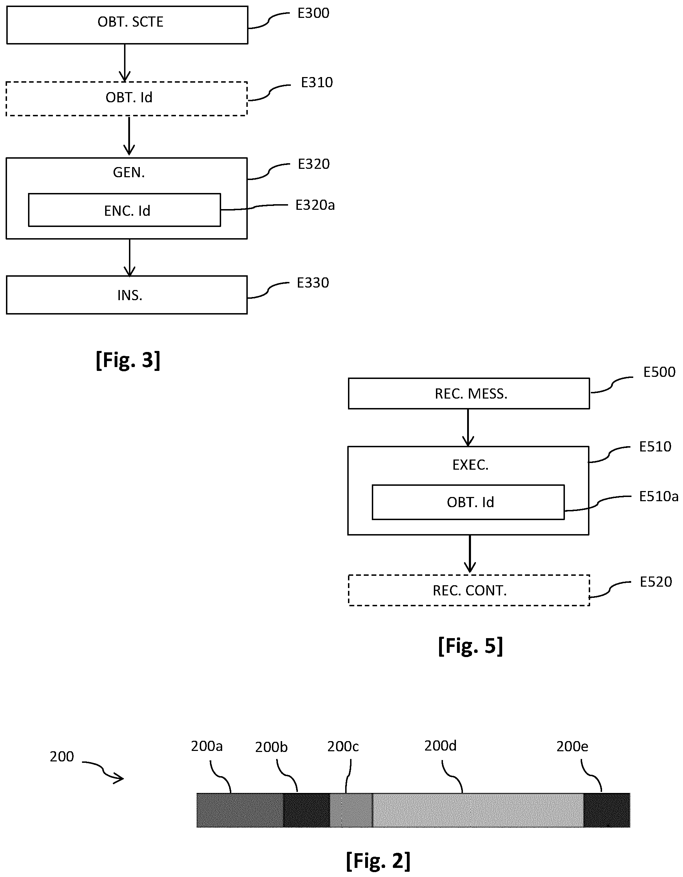

Afin de mettre en oeuvre le procédé de substitution (décrit plus avant ci-dessous en relation avec la Fig. 5), le terminal 110 met en oeuvre une application 110app particulière, du type HbbTV, que le terminal 110 télécharge depuis le serveur internet statique 100a comme décrit ci-dessus.

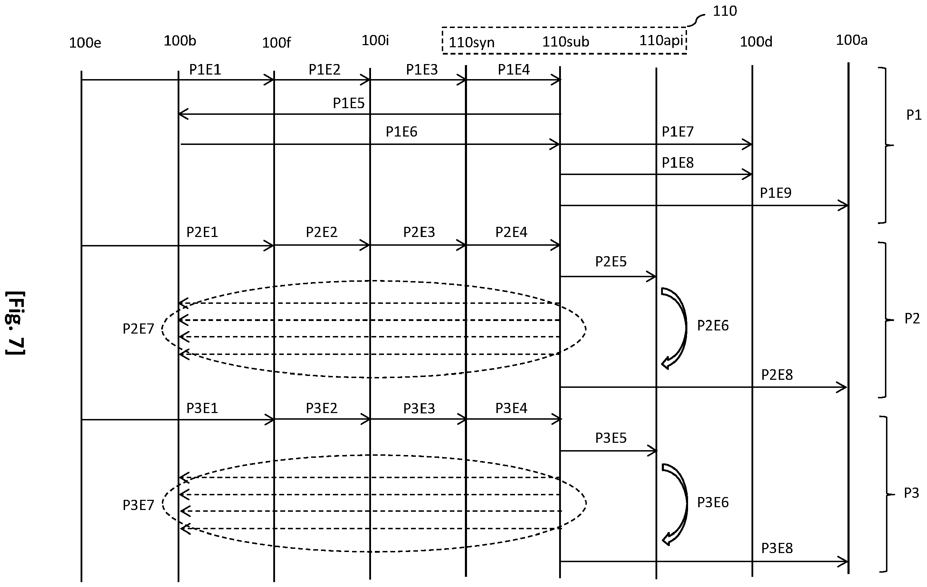

Plus particulièrement, l'application 110app instancie différents modules, ici logiciels :
- un module 110syn qui gère la réception des messages de notifications d'événements 200 et en extrait les informations temporelles (les PTS au format SCTE 35) ainsi que, le cas échéant, les informations d'identifications et optionnellement une durée de substitution associée aux informations temporelles en question ;
- un module 110sub qui gère l'identification des contenus de substitution, leur pré-chargement et leur stockage dans le terminal 110. Le module 110sub opère ensuite la substitution et le signalement de l'état des opérations mises en oeuvre. De telles actions mises en oeuvre par le module 110sub sont illustrées plus avant ci-dessous en relation avec la Fig. 7.

Dans d'autres modes de réalisation, les fonctionnalités implémentées dans les modules 110syn, 110sub et 110api sont regroupées en un seul module au sein de l'application 110app. Dans d'autres modes de réalisation, les fonctionnalités implémentées dans les modules 110syn, 110sub et 110api sont mises en oeuvre dans plusieurs modules au sein de l'application 110app. Dans tous les modes de réalisation de l'application 110app, il peut être dit que l'application 110app, et donc le terminal 110, met en oeuvre les fonctionnalités des modules 110syn, 110sub et 110api précitées.

On présente désormais, en relation avec la **Fig. 2** un exemple de structure de message de notification d'événement 200 tel qu'utilisé pour la signalisation entre le multiplexeur MPEG/DVB 100g et le terminal 110 selon un mode de réalisation de l'invention.

Plus particulièrement, la partie de données utiles du message de notification d'événement 200 comprend un champ 200a contenant toujours les mêmes informations codées en ascii, e.g. « SC ». Le champ 200a permet au terminal 110, e.g. au module 110syn, d'identifier si le message de notification d'événement 200 reçu est un message de notification d'événement 200 contenant des informations de substitution.

Le message de notification d'événement 200 comprend un champ 200b contenant une ou plusieurs informations temporelles (une ou plusieurs PTS au format SCTE 35) pour la substitution. Une PTS est par exemple codée sur trente-trois bits suivant le format SCTE 35.

Le message de notification d'événement 200 comprend un champ 200c qui définit en octets la taille du champ 200d de données proprement dit.

Le champ 200d de données contient les informations d'identifications associées à la ou aux informations temporelles du champ 200b. Il s'agit par exemple d'un identifiant d'une (ou plusieurs) action de substitution à exécuter par le terminal 101 et/ou, optionnellement, de la durée de substitution associée aux informations temporelles en question.

Le champ 200e véhicule quant à lui un CRC (pour « Cyclic Redundancy Check » en anglais), e.g. un CRC 32, calculé sur l'ensemble des champs précités. De la sorte, il peut être vérifié que la partie utile du message de notification d'événement 200 contient bien une notification de substitution. On présente désormais, en relation avec la **Fig. 3** les étapes d'un procédé de signalisation, par le système 100 de diffusion au terminal 110, de la substitution d'un contenu diffusé via le réseau de diffusion 120 selon un mode de réalisation de l'invention.

Lors d'une **étape E300**, le dispositif 100i de signalisation obtient un paquet d'informations de substitution. Par exemple, dans le mode de réalisation de la Fig. 1, le dispositif 100i de signalisation extrait de tels paquets d'informations de substitutions à partir du flux MPEG-TS en provenance du codeur vidéo 100f. Dans d'autres modes de réalisation du système 100 discutés ci-dessus en relation avec la Fig. 1 et dans lesquels le dispositif 100i est un module inclus dans le codeur vidéo 100f, le dispositif 100i obtient par exemple les paquets d'informations de substitution au format SCTE 35 directement, i.e. sans avoir à les extraire du flux MPEG-TS.

De retour à la Fig. 3, le paquet d'informations de substitution comprend une information temporelle (e.g. une PTS au format SCTE 35 comme décrit ci-dessus en relation avec la Fig. 1) indicative d'un instant d'exécution par le terminal 110 d'une (ou plusieurs) action pour la substitution du contenu diffusé par le contenu de substitution. L'information temporelle correspond à une date de restitution d'une image du contenu diffusé en référence à une horloge de référence (e.g. une horloge PCR ou TEMI comme décrit ci-dessus en relation avec la Fig. 1) embarquée dans le contenu diffusé.

Dans d'autres modes de réalisation, le dispositif 100i de signalisation obtient plusieurs paquets d'informations de substitution comprenant une telle information temporelle.

De retour à la Fig. 3, lors d'une **étape E310**, le dispositif 100i de signalisation obtient une information d'identification. La (ou les) action exécutée par le terminal 110 est fonction de l'information d'identification en question. Par exemple, le dispositif 100i reçoit l'information d'identification du serveur internet statique 100a, e.g. au travers du réseau large bande 130. Dans ce cas, les informations d'identifications sont optionnelles dans les paquets d'informations de substitution au format SCTE 35. Par exemple, les paquets d'informations de substitution au format SCTE 35 encapsulent uniquement les informations temporelles.

Dans d'autres modes de réalisation, l'étape E310 n'est pas mise en oeuvre et le dispositif 100i obtient l'information d'identification via le paquet d'informations de substitution obtenu à l'étape E300 précitée. Optionnellement, le dispositif 100i obtient également la durée de substitution associée aux informations temporelles correspondantes dans les paquets d'informations de substitution au format SCTE 35.

Dans certains modes de réalisation, le dispositif 100i de signalisation obtient plusieurs informations d'identifications. Par exemple, tout ou partie des informations d'identifications en question sont obtenues via un ou plusieurs paquets d'informations de substitution obtenus à l'étape E300 précitée (un paquet d'informations de substitution donné pouvant éventuellement véhiculer plusieurs informations d'identifications). Dans ce cas, le reste des informations d'identifications est obtenu directement du serveur internet statique 100a, e.g. au travers du réseau large bande 130. Dans certains modes de réalisation, une information d'identification est associée à une action exécutée par le terminal 110. Dans d'autres modes de réalisation, une information d'identification peut prendre plusieurs valeurs associées chacune, dans le terminal 110, à un jeu distinct d'une ou plusieurs actions. Par exemple, une telle action appartient au groupe comprenant :
- une sélection de l'horloge du flux de données utilisée pour réaliser la synchronisation du décrochage (par exemple de type PCR ou TEMI) ;- une requête en informations de téléchargement du contenu ciblé via le réseau large bande 130 ;
- un téléchargement du contenu ciblé via le réseau large bande 130 sur la base des informations de téléchargement ;
- un signalement que le terminal 110 est prêt à procéder à la substitution ;
- un décodage du contenu ciblé ;
- une restitution du contenu ciblé sous une forme décodée ;
- un signalement que le contenu ciblé a été substitué au contenu diffusé ; et
- une reprise du décodage du contenu diffusé.

De telles actions sont illustrées plus avant ci-dessous en relation avec la Fig. 7.

De retour à la Fig. 3, lors d'une **étape E320**, le dispositif 100i de signalisation génère un message de notification d'événement 200 (e.g. un message « StreamEvents » au format DSM-CC comme décrit ci-dessus en relation avec la Fig. 1) comprenant au moins une information temporelle parmi la ou les informations temporelles reçues via le ou les paquets d'informations de substitution obtenus lors de l'étape E300 précitée.

Lors d'une **étape E320a**, le dispositif 100i de signalisation encapsule, dans le message de notification d'événement 200, au moins une information d'identification obtenue. Par exemple, dans les modes de réalisation dans lesquels le dispositif 100i de signalisation obtient plusieurs informations d'identifications directement du serveur internet statique 100a et plusieurs informations temporelles via les paquets d'informations de substitution au format SCTE 35, le dispositif 100i de signalisation associe par exemple séquentiellement, e.g. selon un ordre prédéterminé (e.g. selon l'ordre de réception) les informations d'identifications aux informations temporelles afin de générer les messages de notifications d'événements 200.

Dans certains modes de réalisation, le dispositif 100i de signalisation génère plusieurs tels messages de notifications d'événements 200 à partir de plusieurs informations temporelles et de plusieurs informations d'identifications préalablement obtenues.

Dans certains modes de réalisation, le dispositif 100i de signalisation ne met pas en oeuvre l'étape E320a d'encapsulation et le ou les messages de notifications d'événements 200 ne comprennent pas d'informations d'identifications. Dans ce cas, un tel message de notification d'événement 200 déclenche une (ou plusieurs) action prédéterminée dans le terminal 110.

Dans certains modes de réalisation, un message de notification d'événement 200 comprend une information temporelle et une information d'identification associée.

Dans certains modes de réalisation, un message de notification d'événement 200 comprend une information temporelle et plusieurs informations d'identifications associées (e.g. pour identifier un contenu de substitution et une ou plusieurs actions associées).

Dans certains modes de réalisation, un message de notification d'événement 200 comprend plusieurs informations temporelles et plusieurs informations d'identifications associées.

De retour à la Fig. 3, lors d'une **étape E330**, le multiplexeur MPEG/DVB 100g insère dans le flux de données véhiculant le contenu diffusé au sein du réseau de diffusion 120, le (ou les) message de notification d'événement 200 généré lors de la mise en oeuvre de l'étape E320. Pour ce faire, le (ou les) message de notification d'événement 200 ont été préalablement transmis par le dispositif 100i de signalisation au multiplexeur MPEG/DVB 100g. Plus particulièrement, le multiplexeur MPEG/DVB 100g insère chaque message de notification d'événement 200 dans le flux multiplexé à un endroit temporel antérieur aux images dont les dates de restitution correspondent aux informations temporelles véhiculées dans le message de notification d'événement 200 en question. De la sorte, le terminal 110 reçoit le message de notification d'événement 200 avant la date prévue d'exécution des actions de substitution correspondantes en référence au contenu diffusé.

Dans d'autres modes de réalisation du système 100 discutés ci-dessus en relation avec la Fig. 1 et dans lesquels le dispositif 100i est un module inclus dans le multiplexeur MPEG/DVB 100g, le dispositif 100i insère par exemple lui-même le (ou les) message de notification d'événement 200 dans le flux de données.

La **Fig. 4** présente un exemple de structure du système 100 de diffusion télévisuelle, permettant la mise en oeuvre du procédé de signalisation de la Fig. 3. Le système 100 comprend une mémoire vive 403 (par exemple une mémoire RAM), une unité de traitement 402 équipée par exemple d'un processeur, et pilotée par un programme d'ordinateur stocké dans une mémoire morte 401 (par exemple une mémoire ROM ou un disque dur). A l'initialisation, les instructions de code du programme d'ordinateur sont par exemple chargées dans la mémoire vive 403 avant d'être exécutées par le processeur de l'unité de traitement 402.

Cette Fig. 4 illustre seulement une manière particulière, parmi plusieurs possibles, de réaliser le système 100, afin qu'il effectue certaines étapes du procédé de signalisation détaillé ci-dessus, en relation avec la Fig. 3 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où le système 100 est réalisé avec une machine de calcul reprogrammable, le programme correspondant (c'est-à-dire la séquence d'instructions) pourra être stocké dans un médium de stockage amovible (tel que par exemple un CD-ROM, un DVD-ROM, une clé USB, etc.) ou non, ce médium de stockage étant lisible partiellement ou totalement par un ordinateur ou un processeur.

Dans certains modes de réalisations, les entités ou modules 100a à 100i composant le système 100 de la Fig. 1 sont réalisées sous forme de composantes matérielles en tout ou partie distinctes. Dans ce cas, les composantes matérielles en question comprennent toutes des moyens équivalents à ceux décrits ci-dessus en relation avec la Fig. 4.

On présente désormais, en relation avec la **Fig. 5** les étapes d'un procédé de substitution, par le terminal 110, d'un contenu diffusé via le réseau de diffusion 120 selon un mode de réalisation de l'invention.

Lors d'une **étape E500**, le terminal 110 reçoit le (ou les) message de notification d'événement 200 inséré dans un flux de données véhiculant le contenu diffusé au sein du réseau de diffusion 120. Comme décrit ci-dessus en relation par exemple avec le procédé de signalisation la Fig. 3, le (ou les) message de notification d'événement comprend au moins une information temporelle indicative d'un instant d'exécution par le terminal 110 d'au moins une action pour la substitution du contenu diffusé par le contenu de substitution. Ladite au moins une information temporelle correspond à une date de restitution d'une image du contenu diffusé (e.g. une PTS au format SCTE 35 comme décrit ci-dessus en relation avec la Fig. 1) en référence à une horloge de référence (e.g. une horloge PCR ou TEMI comme décrit ci-dessus en relation avec la Fig. 1) embarquée dans le contenu diffusé. Ainsi, via le message de notification d'événement reçu et l'horloge de référence embarquée dans le contenu diffusé, le terminal 110 a les informations temporelles dont il a besoin afin de synchroniser l'exécution de la (ou des) action de substitution avec le contenu diffusé.

Lors d'une **étape E510**, le terminal 110 exécute ladite au moins une action à un instant d'exécution fonction de ladite au moins une information temporelle.

Pour ce faire, lors d'une **étape E510a**, le terminal 110 obtient une (ou plusieurs) information d'identification encapsulée dans le (ou les) message de notification d'événement. Ladite au moins une action est fonction de la (ou les) information d'identification ainsi obtenue.

Dans certains modes de réalisation, une information d'identification est associée à une action exécutée par le terminal 110. Dans d'autres modes de réalisation, une information d'identification peut prendre plusieurs valeurs associées chacune, dans le terminal 110, à un jeu distinct d'une ou plusieurs actions. Dans d'autres modes de réalisation, aucune information d'identification n'est comprise dans le (ou les) message de notification d'événement. Dans ce cas, un tel message de notification d'événement 200 déclenche une (ou plusieurs) action prédéterminée dans le terminal 110.

Des exemples de telles actions ont été données ci-dessus en relation avec la Fig. 3 ainsi que ci-dessous en relation avec la Fig. 7.

Lors d'une **étape E520**, le terminal 110 reçoit le contenu ciblé, e.g. depuis le serveur 100d de contenus via le réseau large bande 130 auquel est connecté ledit terminal.

Par exemple, le contenu ciblé est identifié par une information d'identification obtenue lors de la mise en oeuvre de l'étape E510a.

Dans d'autres modes de réalisation, le terminal 110 ne met pas en oeuvre l'étape E520 et le contenu ciblé est inclus par exemple dans l'application 110app mise en oeuvre sur le terminal 110.

La **Fig. 6** présente un exemple de structure terminal 110, permettant la mise en oeuvre du procédé de substitution de la Fig. 5. Le terminal 110 comprend une mémoire vive 603 (par exemple une mémoire RAM), une unité de traitement 602 équipée par exemple d'un processeur, et pilotée par un programme d'ordinateur stocké dans une mémoire morte 601 (par exemple une mémoire ROM ou un disque dur). A l'initialisation, les instructions de code du programme d'ordinateur sont par exemple chargées dans la mémoire vive 603 avant d'être exécutées par le processeur de l'unité de traitement 602.

Cette Fig. 6 illustre seulement une manière particulière, parmi plusieurs possibles, de réaliser le terminal 110, afin qu'il effectue certaines étapes du procédé de substitution détaillé ci-dessus, en relation avec la Fig. 6 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où le terminal 110 est réalisé avec une machine de calcul reprogrammable, le programme correspondant (c'est-à-dire la séquence d'instructions) pourra être stocké dans un médium de stockage amovible (tel que par exemple un CD-ROM, un DVD-ROM, une clé USB, etc.) ou non, ce médium de stockage étant lisible partiellement ou totalement par un ordinateur ou un processeur.

On présente désormais, en relation avec la **Fig. 7** un exemple d'actions effectuées par les entités de la Fig. 1 lors de la mise en oeuvre des procédés des Fig. 3 et Fig. 5 selon un mode de réalisation de l'invention.

### Phase P1 : Préparation de la substitution du contenu diffusé

Lors d'une **étape P1E1,** le système de production vidéo 100e génère un premier paquet d'information de substitution au format SCTE 104 et le transmet au codeur vidéo 100f via le flux SDI. Le premier paquet d'information de substitution comprend ainsi une première information temporelle et plusieurs informations d'identifications correspondantes. Dans le cas présent, les informations d'identifications identifient une séquence d'actions devant être exécutées par le terminal 110 afin de préparer la substitution du contenu diffusé par un contenu ciblé.

Lors d'une **étape P1E2,** le codeur vidéo 100f convertit le premier paquet d'information de substitution au format SCTE 104 présent dans le flux SDI reçu en paquet d'information de substitution au format SCTE 35 inséré dans le flux MPEG-TS qu'il délivre au multiplexeur MPEG/DVB 100g. Le paquet d'information de substitution au format SCTE 35 comprend une information temporelle correspondant à la conversion de la première information temporelle au format SCTE 35 (e.g. une PTS au format SCTE 35) ainsi que les informations d'identifications associées.

Le dispositif 100i de signalisation met en oeuvre certaines étapes du procédé de la Fig. 3 et obtient le paquet d'information de substitution au format SCTE 35. Le dispositif 100i génère ainsi un message de notification d'événement 200 correspondant (e.g. un « StreamEvents » au format DSM-CC). Le message de notification d'événement 200 encapsule l'information temporelle et les informations d'identifications associées. Selon un premier exemple, l'information temporelle est une PTS dont la valeur donne l'instant d'exécution, par le terminal, de la séquence d'actions permettant de préparer la substitution du contenu diffusé par un contenu ciblé. Selon un deuxième exemple, l'information temporelle est une PTS dont la valeur donne l'instant d'exécution, par le terminal, de la substitution. Le message de notification d'événement 200 est inséré dans le flux MPEG-TS.

Lors d'une **étape P1E3,** le module 110syn de l'application HbbTV 110app du terminal 110 reçoit le message de notification d'événement 200 et en extrait l'information temporelle ainsi que les informations d'identifications associées (e.g. par mise en oeuvre de certaines étapes du procédé de la Fig. 5).

Lors d'une **étape P1E4,** le module 110sub reçoit l'information temporelle ainsi que les informations d'identifications associées. Sur cette base, le module 110sub gère l'identification des contenus de substitution, leur pré-chargement et leur stockage dans le terminal 110.

Pour ce faire, lors d'une **étape P1E5,** le module 110sub envoie une requête en contenus au serveur 100b d'attribution.

Lors d'une **étape P1E6,** le serveur 100b d'attribution retourne une réponse au module 110sub, e.g. au format VAST (pour « Digital Video Ad Serving Template » en anglais) ou VMAP (pour « Video Multiple Ad Playlist » en anglais). Cette réponse contient les informations nécessaires, e.g. une ou plusieurs URL (pour « Uniform Resource Locator » en anglais), pour que le terminal 110 puisse télécharger les contenus de substitution à afficher ainsi qu'éventuellement les informations à utiliser lors du signalement de l'état d'avancement de la substitution par les contenus de substitution.

Lors d'une **étape P1E7,** le module 110sub réalise le pré-chargement d'un premier contenu de substitution, à partir du serveur 100d de contenus sur la base des informations obtenues lors de la mise en oeuvre de l'étape P1E6.

Lors d'une **étape P1E8,** le module 110sub réalise le pré-chargement d'un deuxième contenu de substitution, à partir du serveur 100d de contenus sur la base des informations obtenues lors de la mise en oeuvre de l'étape P1E6.

Lors d'une **étape P1E9,** le module 110sub réalise un signalement technique au serveur internet statique 100a pour signifier que le terminal 110 est prêt pour la substitution du contenu diffusé.

### Phase P2 : Substitution du contenu diffusé par le premier contenu de substitution

Les étapes **P2E1 à P2E4** sont identiques aux étapes P1E1 à P1E4 de la Phase 1, si ce n'est qu'elles concernent ici la substitution du contenu diffusé par les contenus de substitution obtenus lors de la Phase P1. Ainsi, seule la nature des informations d'identifications est différente afin de déclencher les actions correspondantes au niveau du terminal 110. Quant à l'information temporelle, il s'agit par exemple d'une PTS dont la valeur donne l'instant d'exécution, par le terminal, de la substitution. En particulier, l'information temporelle peut être identique à celle transmise dans le message de notification d'événement utilisé pour la préparation de la substitution au cours de l'étape P1E2.

Lors d'une **étape P2ES,** le module 110syn prépare la substitution via le module 110api implémentant une API (pour « Application Programming Interface » en anglais) HbbTV TA (pour « Targeted Advertisement » en anglais). Plus particulièrement, le module 110sub passe au module 110api l'information temporelle (e.g. une PTS) et la référence du premier contenu de substitution pré-chargé lors de la mise en oeuvre de l'étape P1E7.

Lors d'une **étape P2E6,** le module 110api procède à la substitution du contenu diffusé par le premier contenu de substitution pré-chargé.

Lors d'une **étape P2E7,** le module 110sub réalise un signalement de l'avancement de la substitution du contenu diffusé par le premier contenu de substitution, e.g. en envoyant des requêtes VAST, au serveur 100b.

Lors d'une **étape P2ES,** le module 110sub réalise un signalement technique au serveur internet statique 100a pour permettre une gestion efficace des terminaux autorisés. Par exemple, le serveur internet statique 100a analyse les informations qui lui sont remontées par tous les terminaux mettant en oeuvre une ou plusieurs substitutions. Si l'analyse montre un disfonctionnement systématique sur un type de terminal, le serveur internet statique 100a désigne comme indésirable les terminaux du type en question. Le serveur internet statique 100a s'interdit de fournir de nouvelles informations de substitution aux terminaux du type en question.

### Phase P3 : Substitution du contenu diffusé par le deuxième contenu de substitution

Les étapes **P3E1 à P3E8** sont identiques aux étapes P2E1 à P2E8 de la Phase 2, si ce n'est qu'elles concernent ici la substitution du contenu diffusé par le deuxième contenu de substitution en lieu et place du premier contenu de substitution. Par conséquent, les étapes P3E1 à P3E8 ne sont détaillées plus avant.

## Revendications

1. Procédé de signalisation, à un terminal (110), de la substitution d'un contenu diffusé via un réseau de diffusion (120) auquel est connecté ledit terminal par un contenu de substitution ciblé au moins pour ledit terminal, **caractérisé en ce qu'**il comprend, mis en oeuvre dans un système de diffusion :
- une obtention (E300) d'au moins un paquet d'informations de substitution au format SCTE 35 comprenant une information temporelle PTS, pour « Présentation TimeStamp », indicative d'un instant d'exécution par ledit terminal d'au moins une action pour la substitution du contenu diffusé par le contenu de substitution, ladite information temporelle correspondant à une date de restitution d'une image dudit contenu diffusé en référence à une horloge de référence embarquée dans ledit contenu diffusé ;
- une génération (E320) d'au moins un message de notification d'événement « StreamEvent » au format DSM-CC (200) comprenant au moins une information temporelle parmi la ou les informations temporelles reçues via ledit au moins un paquet d'informations de substitution ; et
- une insertion (E330), dans un flux de données véhiculant ledit contenu diffusé au sein dudit réseau de diffusion, dudit au moins un message de notification d'événement à un emplacement temporel antérieur à ladite au moins une information temporelle dans un ordre chronologique de restitution des images dudit contenu diffusé.

2. Procédé selon la revendication 1 dans lequel ledit au moins un paquet d'informations de substitution comprend au moins une information d'identification, ladite au moins une action étant fonction de ladite au moins une information d'identification,
et dans lequel ladite génération comprend une encapsulation (E320a) de ladite au moins une information d'identification dans ledit au moins un message de notification d'événement.

3. Procédé selon la revendication 1 dans lequel ledit au moins un paquet d'informations de substitution comprend une unique information d'identification pouvant prendre plusieurs valeurs associées chacune, dans le terminal, à un jeu distinct d'au moins une action,
et dans lequel ladite génération comprend une encapsulation (E320a) de ladite unique information d'identification dans ledit au moins un message de notification d'événement.

4. Procédé selon la revendication 1 comprenant une obtention (E310) d'au moins une information d'identification non comprise dans ledit au moins un paquet d'informations de substitution, ladite au moins une action étant fonction de ladite au moins une information d'identification, et dans lequel ladite génération comprend une encapsulation (E320a) de ladite au moins une information d'identification dans ledit au moins un message de notification d'événement.

5. Procédé selon la revendication 1 comprenant une obtention (E310) d'une unique information d'identification pouvant prendre plusieurs valeurs associées chacune, dans le terminal, à un jeu distinct d'au moins une action, ladite unique information d'identification étant non comprise dans ledit au moins un paquet d'informations de substitution,
et dans lequel ladite génération comprend une encapsulation (E320a) de ladite unique information d'identification dans ledit au moins un message de notification d'événement.

6. Procédé de substitution, par un terminal (110), d'un contenu diffusé via un réseau de diffusion (120) auquel est connecté ledit terminal par un contenu de substitution ciblé au moins pour ledit terminal, **caractérisé en ce que** ledit terminal effectue :
- une réception (E500) d'au moins un message de notification d'événement « StreamEvent » au format DSM-CC (200) inséré dans un flux de données véhiculant ledit contenu diffusé au sein dudit réseau de diffusion, ledit au moins un message de notification d'événement comprenant au moins une information temporelle PTS indicative d'un instant d'exécution par ledit terminal d'au moins une action pour la substitution du contenu diffusé par le contenu de substitution, ladite au moins une information temporelle correspondant à une date de restitution d'une image dudit contenu diffusé en référence à une horloge de référence embarquée dans ledit contenu diffusé ; et
- une exécution (E510) de ladite au moins une action à un instant d'exécution fonction de ladite au moins une information temporelle.

7. Procédé selon la revendication 6 dans lequel ladite exécution comprend une obtention (E510a) d'au moins une information d'identification encapsulée dans ledit au moins un message de notification d'événement,
et dans lequel ladite au moins une action est fonction de ladite au moins une information d'identification obtenue.

8. Procédé selon la revendication 6 dans lequel ladite exécution comprend une obtention (E510a) d'une unique information d'identification pouvant prendre plusieurs valeurs associées chacune, dans le terminal, à un jeu distinct d'au moins une action,
et dans lequel ladite au moins une action est fonction de ladite unique information d'identification obtenue.

9. Procédé selon l'une quelconque des revendications 6 à 8, dans lequel ledit terminal effectue une réception (E520) dudit contenu ciblé via un réseau large bande auquel est connecté ledit terminal.

10. Procédé selon l'une quelconque des revendications 1 à 9, dans lequel ladite au moins une action appartient au groupe comprenant :
- une sélection de l'horloge du flux de données utilisée pour synchroniser la substitution ;
- une requête en informations de téléchargement dudit contenu ciblé via un réseau large bande ;
- un téléchargement dudit contenu ciblé via ledit réseau large bande sur la base desdites informations de téléchargement ;
- un signalement que ledit terminal est prêt à procéder à ladite substitution ;
- un décodage dudit contenu ciblé ;
- une restitution du contenu ciblé sous une forme décodée ;
- un signalement que ledit contenu ciblé a été substitué audit contenu diffusé ; et
- une reprise du décodage dudit contenu diffusé.

11. Procédé selon l'une quelconque des revendications 1 à 10, dans lequel le terminal est un terminal hybride supportant le standard HbbTV TA, pour « Hybrid Broadcast Broadband TV Targeted Advertisement » en anglais.

12. Procédé selon l'une quelconque des revendications 1 à 11, dans lequel ledit flux de données est au format MPEG-TS, pour « Moving Picture Experts Group - Transport Stream » en anglais, et dans lequel ladite horloge de référence embarquée dans ledit contenu diffusé est un signal d'horloge PCR, pour « Program Clock Reference » en anglais ou TEMI, pour « Timed External Media Information » en anglais).

13. Produit programme d'ordinateur comprenant des instructions de code de programme pour la mise en oeuvre d'un procédé selon l'une quelconque des revendications 1 à 12, lorsque ledit programme est exécuté sur un ordinateur.

14. Système (100) de diffusion configuré pour signaler, à un terminal (110), la substitution d'un contenu diffusé via un réseau de diffusion (120) auquel est connecté ledit terminal par un contenu de substitution ciblé au moins pour ledit terminal, **caractérisé en ce qu'**il comprend une machine de calcul reprogrammable (402) ou une machine de calcul dédiée, configurée pour :
- obtenir au moins un paquet d'informations de substitution au format SCTE 35 comprenant une information temporelle PTS indicative d'un instant d'exécution par ledit terminal d'au moins une action pour la substitution du contenu diffusé par le contenu de substitution, ladite information temporelle correspondant à une date de restitution d'une image dudit contenu diffusé en référence à une horloge de référence embarquée dans ledit contenu diffusé ;
- générer au moins un message de notification d'événement « StreamEvent » au format DSM-CC (200) comprenant au moins une information temporelle parmi la ou les informations temporelles reçues via ledit au moins un paquet d'informations de substitution ; et
- insérer, dans un flux de données véhiculant ledit contenu diffusé au sein dudit réseau de diffusion, dudit au moins un message de notification d'événement à un emplacement temporel antérieur à ladite au moins une information temporelle dans un ordre chronologique de restitution des images dudit contenu diffusé.

15. Terminal (110) configuré pour substituer un contenu diffusé via un réseau de diffusion (120) auquel est connecté ledit terminal par un contenu de substitution ciblé au moins pour ledit terminal, **caractérisé en ce qu'**il comprend une machine de calcul reprogrammable (602) ou une machine de calcul dédiée, configurée pour :
- réceptionner au moins un message de notification d'événement « StreamEvent » au format DSM-CC (200) inséré dans un flux de données véhiculant ledit contenu diffusé au sein dudit réseau de diffusion, ledit au moins un message de notification d'événement comprenant au moins une information temporelle PTS indicative d'un instant d'exécution par ledit terminal d'au moins une action pour la substitution du contenu diffusé par le contenu de substitution, ladite au moins une information temporelle correspondant à une date de restitution d'une image dudit contenu diffusé en référence à une horloge de référence embarquée dans ledit contenu diffusé ; et
- exécuter ladite au moins une action à un instant d'exécution fonction de ladite au moins une information temporelle.

## Patentansprüche

1. Verfahren, um einem Endgerät (110) die Ersetzung eines Inhalts zu signalisieren, der über ein Sendenetz (120) gesendet wird, mit dem das Endgerät verbunden ist, durch einen Ersetzungsinhalt, der zumindest für das Endgerät bestimmt ist, **dadurch gekennzeichnet, dass** es, wenn es in einem Sendesystem implementiert ist, Folgendes umfasst:
- eine Erlangung (E300) mindestens eines Ersetzungsinformationspakets im Format SCTE 35, das eine Zeitinformation PTS für "Presentation TimeStamp" umfasst, die einen Zeitpunkt angibt, zu dem das Endgerät mindestens eine Aktion zur Ersetzung des gesendeten Inhalts durch den Ersetzungsinhalt ausführt, wobei die Zeitinformation einem Datum der Wiedergabe eines Bildes des gesendeten Inhalts unter Bezugnahme auf eine in den gesendeten Inhalt eingebetteten Referenztakt entspricht;
- eine Erzeugung (E320) mindestens einer Ereignisbenachrichtigungsnachricht "Stream Event" im DSM-CC-Format (200), die mindestens eine Zeitinformation aus der Zeitinformation oder den Zeitinformationen enthält, die über das mindestens eine Ersetzungsinformationspaket empfangen wurden; und
- eine Einfügung (E330) der mindestens einen Ereignisbenachrichtigungsnachricht in einen Datenstrom, der den gesendeten Inhalt innerhalb des Sendenetzes transportiert, an einer zeitlichen Stelle vor der mindestens einen Zeitinformation in einer chronologischen Reihenfolge der Wiedergabe von Bildern des gesendeten Inhalts.

2. Verfahren nach Anspruch 1, wobei das mindestens eine Ersetzungsinformationspaket mindestens eine Identifikationsinformation umfasst, wobei die mindestens eine Aktion eine Funktion der mindestens einen Identifikationsinformation ist,
und wobei die Erzeugung eine Einkapselung (E320a) der mindestens einen Identifikationsinformation in die mindestens eine Ereignisbenachrichtigungsnachricht umfasst.

3. Verfahren nach Anspruch 1, bei dem das mindestens eine Paket von Ersetzungsinformationen eine eindeutige Identifikationsinformation umfasst, die mehrere Werte annehmen kann, von denen jeder im Endgerät mit einem separaten Satz von mindestens einer Aktion verbunden ist, und bei dem die Erzeugung eine Einkapselung (E320a) der eindeutigen Identifikationsinformation in die mindestens eine Ereignisbenachrichtigungsnachricht umfasst.

4. Verfahren nach Anspruch 1, umfassend eine Erlangung (E310) von mindestens einer Identifikationsinformation, die nicht in dem mindestens einen Ersetzungsinformationspaket enthalten ist, wobei die mindestens eine Aktion von der mindestens einen Identifikationsinformation abhängig ist, und wobei die Erzeugung eine Einkapselung (E320a) der mindestens einen Identifikationsinformation in der mindestens einen Ereignisbenachrichtigungsnachricht umfasst.

5. Verfahren nach Anspruch 1, das eine Erlangung (E310) einer eindeutigen Identifikationsinformation umfasst, die mehrere Werte annehmen kann, die im Endgerät jeweils mit einem separaten Satz von mindestens einer Aktion verbunden sind, wobei die eindeutige Identifikationsinformation nicht in dem mindestens einen Ersetzungsinformationspaket enthalten ist,
und wobei die Erzeugung eine Einkapselung (E320a) der eindeutigen Identifikationsinformation in der mindestens einen Ereignisbenachrichtigungsnachricht umfasst.

6. Verfahren, mit dem ein Endgerät (110) einen Inhalt, der über ein Sendenetz (120) gesendet wird, mit dem das Endgerät verbunden ist, durch einen Ersetzungsinhalt, der zumindest für das Endgerät bestimmt ist, **dadurch gekennzeichnet, dass** das Endgerät Folgendes durchführt:
- einen Empfang (E500) mindestens einer Ereignisbenachrichtigungsnachricht "StreamEvent" im Format DSM-CC (200), die in einen Datenstrom eingefügt ist, der den Sendeinhalt innerhalb des Sendenetzes transportiert, wobei die mindestens eine Ereignisbenachrichtigungsnachricht mindestens eine Zeitinformation PTS umfasst, die einen Zeitpunkt der Ausführung mindestens einer Aktion zur Ersetzung des Sendeinhalts durch den Ersetzungsinhalt mittels des Endgeräts anzeigt, wobei die mindestens eine Zeitinformation einem Datum der Wiedergabe eines Bildes des Sendeinhalts in Bezug auf einen in den Sendeinhalt eingebetteten Referenztakt entspricht; und
- eine Ausführung (E510) der mindestens einen Aktion zu einem Ausführungszeitpunkt, der von der mindestens einen Zeitinformation abhängt.

7. Verfahren nach Anspruch 6, wobei die Ausführung eine Erlangung (E510a) von mindestens einer Identifikationsinformation umfasst, die in der mindestens einen Ereignisbenachrichtigungsnachricht eingekapselt ist,
und wobei die mindestens eine Aktion von der mindestens einen erlangten Identifikationsinformation abhängig ist.

8. Verfahren nach Anspruch 6, wobei die Ausführung eine Erlangung (E510a) einer eindeutigen Identifikationsinformation umfasst, die mehrere Werte annehmen kann, die jeweils im Endgerät mit einem separaten Satz von mindestens einer Aktion verbunden sind,
und wobei die mindestens eine Aktion von der mindestens einen erlangten Identifikationsinformation abhängig ist.

9. Verfahren nach einem der Ansprüche 6 bis 8, bei dem das Endgerät einen Empfang (E520) des Zielinhalts über ein Breitbandnetz, mit dem das Endgerät verbunden ist, durchführt.

10. Verfahren nach einem der Ansprüche 1 bis 9, wobei die mindestens eine Aktion zu der Gruppe gehört, die umfasst:
- eine Auswahl des Taktes des Datenstroms, der zur Synchronisierung der Ersetzung verwendet wird;
- eine Informationsanfrage zum Herunterladen des Zielinhalts über ein Breitbandnetz;
- ein Herunterladen des Zielinhalts über das Breitbandnetz auf der Grundlage der Download-Informationen;
- eine Meldung, dass das Endgerät bereit ist, um die Ersetzung durchzuführen;
- eine Decodierung des Zielinhalts;
- eine Wiedergabe des Zielinhalts in dekodierter Form;
- eine Meldung, dass der Zielinhalt in dem Sendeinhalt ersetzt wurde; und
- eine Wiederaufnahme der Decodierung des gesendeten Inhalts.

11. Verfahren nach einem der Ansprüche 1 bis 10, wobei das Endgerät ein hybrides Endgerät ist, das den Standard HbbTV TA unterstützt, der auf Englisch für "Hybrid Broadcast Broadband TV Targeted Advertisement" steht.

12. Verfahren nach einem der Ansprüche 1 bis 11, wobei der Datenstrom im MPEG-TS-Format auf Englisch für "Moving Picture Experts Group - Transport Stream" vorliegt und bei dem der im Sendeinhalt eingebettete Referenztakt ein PCR-Taktsignal auf Englisch für "Program Clock Reference" oder ein TEMI-Taktsignal auf Englisch) für "Timed External Media Information" ist.

13. Computerprogrammprodukt mit Programmcodeanweisungen zum Ausführen eines Verfahrens nach einem der Ansprüche 1 bis 12, wenn das Programm auf einem Computer ausgeführt wird.

14. Sendesystem (100), das so konfiguriert ist, um einem Endgerät (110) die Ersetzung eines Inhalts, der über ein Sendenetzwerk (120) gesendet wird, mit dem das Endgerät verbunden ist, durch einen Ersetzungsinhalt zu signalisieren, der zumindest für das Endgerät bestimmt ist, **dadurch gekennzeichnet, dass** es eine umprogrammierbare Rechenmaschine (402) oder eine dedizierte Rechenmaschine umfasst, die konfiguriert ist, um:
- mindestens ein Ersetzungsinformationspaket im Format SCTE 35 zu erhalten, das eine Zeitinformation PTS enthält, die einen Zeitpunkt anzeigt, zu dem das Endgerät mindestens eine Aktion für die Ersetzung des Sendeinhalts durch den Ersetzungsinhalt ausführt, wobei die Zeitinformation einem Datum der Wiedergabe eines Bildes des Sendeinhalts in Bezug auf einen in den Sendeinhalt eingebetteten Referenztakt entspricht;
- Erzeugen mindestens einer Ereignisbenachrichtigungsnachricht "StreamEvent" im Format DSM-CC (200), die mindestens eine Zeitinformation aus der oder den über das mindestens eine Ersetzungsinformationspaket empfangenen Zeitinformation(en) enthält; und
- Einfügen in einen Datenstrom, der den Sendeinhalt über das Sendenetz verbreitet, der mindestens einen Ereignisbenachrichtigungsnachricht an einer zeitlichen Position vor der mindestens einen zeitlichen Information in einer chronologischen Reihenfolge der Wiedergabe von Bildern des Sendeinhalts.

15. Endgerät (110), das konfiguriert ist, um Inhalte, die über ein Sendenetz (120) gesendet werden, mit dem das Endgerät verbunden ist, durch einen Ersetzungsinhalt zu ersetzen, der zumindest für das Endgerät bestimmt ist, **dadurch gekennzeichnet, dass** es eine umprogrammierbare Rechenmaschine (602) oder eine dedizierte Rechenmaschine umfasst, die konfiguriert ist, um:
- mindestens eine Ereignisbenachrichtigungsnachricht "StreamEvent" im DSM-CC-Format (200) zu empfangen, die in einen Datenstrom eingefügt ist, der den Sendeinhalt innerhalb des Sendenetzes transportiert, wobei die mindestens eine Ereignisbenachrichtigungsnachricht mindestens eine Zeitinformation PTS umfasst, die einen Zeitpunkt der Ausführung mindestens einer Aktion zur Ersetzung des Sendeinhalts durch den Ersetzungsinhalt mittels des Endgeräts anzeigt, wobei die mindestens eine Zeitinformation einem Datum der Wiedergabe eines Bildes des Sendeinhalts in Bezug auf einen in dem Sendeinhalt eingebetteten Referenztakt entspricht; und
- Ausführen der mindestens einen Aktion zu einem Ausführungszeitpunkt, der von der mindestens einen Zeitinformation abhängt.

## Claims

1. A method for signalling, to a terminal (110), the substitution of content broadcast via a broadcast network (120) to which said terminal is connected by substitution content targeted at least for said terminal, **characterised in that** it comprises, implemented in a broadcast system:
- obtaining (E300) at least one packet of substitution information in SCTE 35 format comprising one piece of PTS, for "Presentation TimeStamp", temporal information indicative of an instant of execution by said terminal of at least one action for the substitution of the broadcast content by the substitution content, said one piece of temporal information corresponding to a date of restitution of an image of said broadcast content with reference to a reference clock embedded in said broadcast content;
- generating (E320) at least one event notification message "StreamEvent" in DSM-CC format (200) comprising at least one piece of temporal information among the temporal information received via said at least one packet of substitution information; and
- inserting (E330), into a data stream conveying said content broadcast within said broadcast network, said at least one event notification message at a temporal location prior to said at least one piece of temporal information in a chronological order of restitution of the images of said broadcast content.

2. The method according to claim 1 wherein said at least one packet of substitution information comprises at least one identification information, said at least one action being a function of said at least one identification information,
and wherein said generation comprises an encapsulation (E320a) of said at least one identification information in said at least one event notification message.

3. The method according to claim 1 wherein said at least one packet of substitution information comprises a single identification information which can take several values each associated, in the terminal, with a distinct set of at least one action,
and wherein said generation comprises an encapsulation (E320a) of said unique identification information in said at least one event notification message.

4. The method according to claim 1 comprising obtaining (E310) at least one identification information not comprised in said at least one packet of substitution information, said at least one action being a function of said at least one piece of identification information, and wherein said generation comprises an encapsulation (E320a) of said at least one identification information in said at least one event notification message.

5. The method according to claim 1 comprising obtaining (E310) a single identification information which can take several values each associated, in the terminal, with a distinct set of at least one action, said unique identification information being not comprised in said at least one packet of substitution information,
and wherein said generation comprises an encapsulation (E320a) of said unique identification information in said at least one event notification message.

6. A method for substituting, by a terminal (110), content broadcast via a broadcast network (120) to which said terminal is connected with substitution content targeted at least for said terminal, **characterised in that** said terminal performs:
- a reception (E500) of at least one event notification message "StreamEvent" in DSM-CC format (200) inserted into a data stream conveying said content broadcast within said broadcast network, said at least one event notification message comprising at least one piece of PTS temporal information indicative of an instant of execution by said terminal of at least one action for the substitution of the content broadcast by the substitution content, said at least one piece of temporal information corresponding to a date of restitution of an image of said broadcast content with reference to a reference clock embedded in said broadcast content; and
- an execution (E510) of said at least one action at an execution instant depending on said at least one piece of temporal information.

7. The method according to claim 6 wherein said execution comprises obtaining (E510a) at least one identification information encapsulated in said at least one event notification message,
and wherein said at least one action is a function of said at least one identification information obtained.

8. The method according to claim 6 wherein said execution comprises obtaining (E510a) a single identification information which can take several values each associated, in the terminal, with a distinct set of at least one action,
and wherein said at least one action is a function of said unique identification information obtained.

9. The method according to any one of claims 6 to 8, wherein said terminal performs reception (E520) of said targeted content via a broadband network to which said terminal is connected.

10. The method according to any one of claims 1 to 9, wherein said at least one action belongs to the group comprising:
- a selection of the data stream clock used to synchronise the substitution;
- a request for download information of said targeted content via a broadband network;
- a download of said targeted content via said broadband network on the basis of said download information;
- a report that said terminal is ready to make said substitution;
- a decoding of said targeted content;
- a restitution of the targeted content in decoded form;
- a report that said targeted content has been substituted for said broadcast content; and
- a resumption of decoding of said broadcast content.

11. The method according to any one of claims 1 to 10, wherein the terminal is a hybrid terminal supporting the HbbTV TA, for "Hybrid Broadcast Broadband TV Targeted Advertisement" standard.

12. The method according to any one of claims 1 to 11, wherein said data stream is in MPEG-TS, for "Moving Picture Experts Group - Transport Stream" format, and wherein said reference clock embedded in said broadcast content is a PCR, for "Program Clock Reference" clock or TEMI, for "Timed External Media Information" signal.

13. A computer program product comprising program code instructions for implementing a method according to any one of claims 1 to 12, when said program is executed on a computer.

14. A broadcasting system (100) configured to signal, to a terminal (110), the substitution of content broadcast via a broadcast network (120) to which said terminal is connected by substitution content targeted at least for said terminal, **characterised in that** it comprises a reprogrammable calculation machine (402) or a dedicated calculation machine, configured to:
- obtain at least one packet of substitution information in SCTE 35 format comprising one piece of PTS temporal information indicative of an instant of execution by said terminal of at least one action for the substitution of the content broadcast by the substitution content, said one piece of temporal information corresponding to a date of restitution of an image of said broadcast content with reference to a reference clock embedded in said broadcast content;
- generate at least one event notification message "StreamEvent" in DSM-CC format (200) comprising at least one piece of temporal information among the temporal information received via said at least one packet of substitution information; and
- insert, into a data stream conveying said content broadcast within said broadcast network, said at least one event notification message at a temporal location prior to said at least one piece of temporal information in a chronological order of restitution of the images of said broadcast content.

15. A terminal (110) configured to substitute content broadcast via a broadcast network (120) to which said terminal is connected with substitution content targeted at least for said terminal, **characterised in that** it comprises a reprogrammable calculation machine (602) or a dedicated calculation machine, configured to:
- receive at least one event notification message "StreamEvent" in DSM-CC format (200) inserted into a data stream conveying said content broadcast within said broadcast network, said at least one event notification message comprising at least one piece of PTS temporal information indicative of an execution instant by said terminal of at least one action for the substitution of the content broadcast by the substitution content, said at least one piece of temporal information corresponding to a restitution date of an image of said broadcast content with reference to a reference clock embedded in said broadcast content; and
- execute said at least one action at an execution instant depending on said at least one piece of temporal information.
